# EUROPEAN PATENT APPLICATION

(11) **EP 0 521 539 A1**
(43) Date of publication of application: **07.01.1993**
(21) Application number: 92201004.6
(22) Date of filing: 08.04.1992
(51) Int. Cl.: A01C 23/04, A01C 23/02

(54) **A plant for delivery of a mixture of water and fertilizing substances through an irrigation system**

(30) Priority: 04.07.1991 DK 1308/91
(71) Applicant: Bräuner, Kaj Aage, DK-7470 Karup (DK)
(72) Inventor: Bräuner, Kaj Aage, DK-7470 Karup (DK)
(74) Representative: Olsen, Peter Vestergaard

(57) **Abstract**

A plant for the delivery of a mixture of water and fertilizing agents through an existing irrigation plant (15) is provided with a container (1) for a mixture of water and liquid manure (7), and a pre-mixing tank (3) for a mixture of water and ammonia. The container (1) and the tank (3) are connected to water supply pipes (13,39), a supply pipe (27) for liquid manure and a supply pipe (35) for ammonia. It is thus possible to deliver ammonia and liquid manure alternately or together during the irrigation.

## Description

### BACKGROUND OF THE INVENTION

The invention relates to a plant for the delivery of a mixture of water and fertilizing agents through an irrigation plant, and comprising a container connected to supply pipes for water and with an outlet pipe connected to the irrigation plant.

Such a plant is known from DE patent no. 408,677, where the container is connected in parallel with the supply pipe for the irrigation plant by a branching of the pipe. Due to the water pressure, liquid manure in the container can be pressed slowly out into the supply pipe, where a mixing of the water and liquid manure occurs.

With the known technique, there is a risk in the event of pump stoppage or other failures that water mixed with liquid manure can run back and pollute the water source, e.g. the groundwater. Moreover, with this technique there is no easy possibility of varying the fertilizer concentration in the water or any flexibility for using other types of fertlizer such as ammonia.

Another solution is described in DE patent no. 413,351, in which is shown a highly-positioned container for fertilizer solution which is fed solely by its gravity to a suction pipe in a well with clean water. In the suction pipe there is a non-return valve to prevent reflux. However, if the non-return valve fails, a contamination of the well occurs.

### EXPLANATION OF THE INVENTION

The special feature of the plant according to the invention is that the container is a mixing tank to which there is connected a supply pipe for fertilizing agents, and that in connection herewith there is provided a pre-mixing tank with a second supply pipe for water or a water mixture and a supply pipe for liquid ammonia. Furthermore, there is an additional pipe which connects the pre-mixing tank and the mixing tank.

By using a pre-mixing tank, the delivery of ammonia alternating with liquid manure and dissolved in water can be effected with the same mixing plant, while at the same time the mixing tanks for the mixing of water and fertilizer create better conditions for arrangements which safeguard against contamination of the source of clean water.

It is preferred to configure the plant as disclosed in claim 2, where in the upper part of the pre-mixing tank there are outlets for the second supply pipe and the supply pipe for ammonia. The outlet for the supply pipe containing water is provided with a spreading or atomizing nozzle, and the outlets are arranged in relation to each other in such a manner that the outflowing liquids will have different directions of discharge and can be brought into mutual contact. Here and in the following, the term "upper" is used in relation to the direction of gravity.

When discharged, the liquid ammonia can evaporate and at the same time be brought in contact with the atomized water. A relatively large amount of ammonia can thus be dissolved in a small amount of water, and this takes place without the occurrence of any pressure shock or other undesired phenomena in the transition of ammonia to gas. Thereafter, a further dilution can take place by delivery to the mixing tank.

It is preferable for the outlets for water and ammonia in the pre-mixing tank to be arranged in such a manner that the discharge directions are substantially at right-angles to each other.

When the first supply pipe to the tank discharges in the upper part of the mixing tank, a pocket of air is formed over the water/fertilizer mixture. It is thus prevented that the mixture can run back via the supply pipe to the source of clean water, e.g. to the groundwater.

In order to avoid special security arrangements in the supplying of water to the pre-mixing tank, it is preferable for a pump to be provided in the discharge pipe to the irrigation plant, where downstream after the pump the second supply pipe is connected as a branch pipe.

A further security arrangement is disclosed in claim 6, e.g. when supplying liquid manure from a liquid manure tank. If the pump in the tank fails, it is possible to avoid a siphoning effect and thus avoid that concentrated fertilizer unintentionally runs further into the plant with a risk of contamination damage.

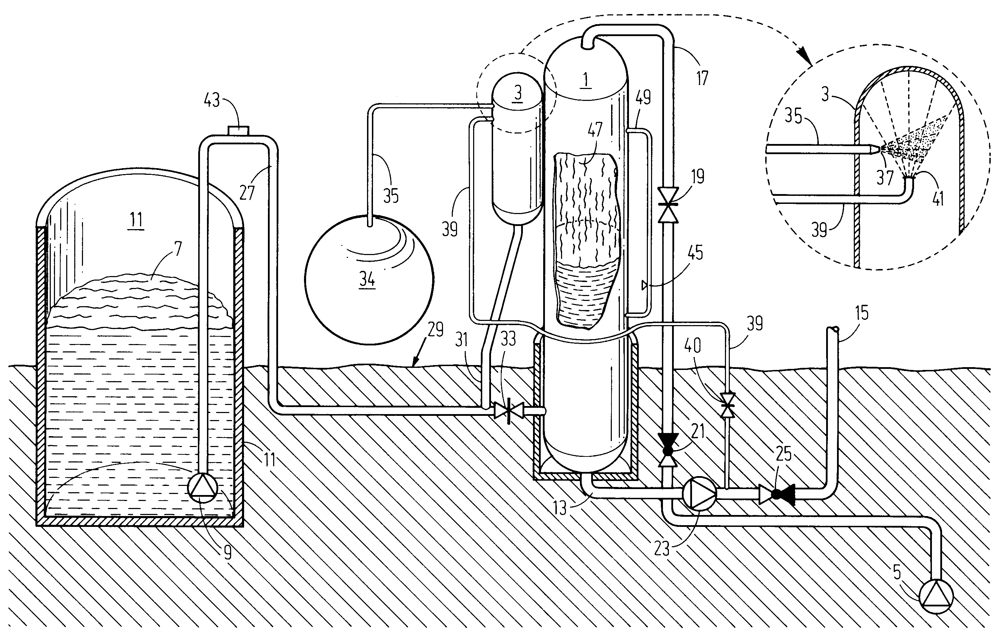

### THE DRAWING

An example embodiment of the plant according to the invention will hereafter be described with reference to the single figure of the drawing.

### DESCRIPTION OF THE EXAMPLE EMBODIMENT

As shown in the drawing the plant according to the invention can consist of a mixing tank 1 and a pre-mixing tank 3, where the tank 1 is supplied with clean water from a pump 5 in a groundwater well, and with liquid manure 7 from a liquid manure pump 9 immersed in a liquid manure tank 11. A discharge pipe 13 can lead the contents of the tank 1 to a connection 15 for a normal field irrigation plant.

A supply pipe 17 for clean water leads up to the uppermost part of the tank 1, into which it discharges. In the supply pipe 17 there is inserted a slide valve 19 and a non-return valve 21. The pipe 13 is provided with a pump 23 and a non-return valve 25.

A pipe 27 from the liquid manure pump 9 extends up over the edge of the tank 11 and thereafter down under the ground surface 29, after which the pipe 27 opens out into the lower part of the mixing tank 1. A pipe 31 connects the bottom of the pre-mixing tank 3 to the pipe 27. A slide valve 33 is provided between the pipe 31 and the mixing tank 1.

A pipe 35 leads from an ammonia container 34 containing liquid ammonia under pressure to the pre-mixing tank 3, where the pipe 35 opens out in a small outlet 37, in that the discharge direction for the ammonia hereby becomes substantially horizontal. A supply pipe 39 for water or water mixed with fertilizer is provided with a slide valve 40 and connects the pipe 13 down-stream from the pump 23 with a nozzle 41 placed in the pre-mixing tank 3. The directions of discharge of water from the nozzle 41 and of the ammonia from the opening 37 intersect each other substantially at right-angles. Both of the outlets 37 and 41 are disposed in the uppermost part of the pre-mixing tank 3.

In the uppermost part of the pipe 27 there is provided a suction valve 43. Along the side of the mixing tank 1 there is provided an electrode switch 45.

With the plant it is possible to selectively mix water or ammonia in the water which is to be brought out to the fields through the irrigation plant. Moreover, it is possible to deliver water only through the irrigation plant.

When watering with clean water, only the pumps 5 and 23 are started, and the slide valve 33 is completely closed.

When liquid manure or fertilizer is to be delivered, the pump 9 is also started, in that the slide valve 40 is closed. Clean water then flows into the mixing tank 1 at the same time that liquid manure flows in via pipe 27. In the tank 1, an air pocket 47 is formed over the mixture of water and liquid manure, which provides extra security against the deflux through pipe 17 of the fertilizer mixture to the groundwater. The electrode switch 45 ensures that if the mixture of water and liquid manure exceeds the upper switch point 49, where there is also a peephole, all pumps in the plant are switched off. The peephole, indicated by reference number 49, at the same time enables a visual check to be made of possible overfilling of the tank 1. The mixture ratio between water and liquid manure can be varied depending on the settings of the valves 19,33 and on the capacities of the pumps 5,9. The non-return valves 21 and 25 ensure that the mixture of water and fertilizer can not run back via pipe 17 to, for example, a groundwater reservoir. If an outflow should occur at some point in the system at the same time that the pump 9 has been stopped, the vacuum valve 43 ensures that liquid manure 7 cannot be drawn in by a siphoning effect. The amount of liquid manure in the water can be regulated by suitable regulation of the water and liquid manure, preferably with a liquid manure content of 5 to 30%. When delivering the liquid manure in these concentrations, it has shown that the nitrogen in the fertilizer is more easily absorbed by the plants, while at the same time the contamination by the sifting of liquid manure down to the groundwater is greatly reduced as compared with traditional methods where the liquid manure is applied in concentrated form.

When delivering ammonia mixed with water, the supply of ammonia is opened through the pipe 35 and the valve 40 is opened. The pump 9 can be stopped or running depending on whether it is desired to deliver liquid manure at the same time. A part of the water-flow in the pipe 13 is then pressed from the pump 23 via the pipe 39 up into the premixing tank 3, where the water is atomized in the stream of evaporated ammonia which flows out from the opening 37. Since approx. 0.5 kg ammonia can be absorbed by one liter of water, a relatively concentrated solution of ammonia can be led through the pipe 31 to the mixing tank 1, in which it is diluted to a suitable concentration before being discharged to the irrigation plant.

## Claims

1. Plant for the delivery of a mixture of water and fertilizing agents through an irrigation system, and comprising a container (1) connected to supply pipe (17) for water and with a discharge pipe (13) connected to the irrigation plant, **characterized** in that the container is a mixing tank (1) to which there is connected a supply pipe (27) for fertilizer, and that in connection herewith there is a pre-mixing tank (3) provided with a second delivery pipe (39) for water or for a mixture containing water, and a supply pipe (35) for liquid ammonia and a second delivery pipe (31,27) which connects the pre-mixing tank (3) and the mixing tank (1).

2. Plant according to claim 1, wherein in the upper part of the pre-mixing tank (3) there are discharge outlets (37,41) for the second delivery pipe (39) and the supply pipe (35) for ammonia, wherein the outlet (37) for the delivery pipe (39) containing water is provided with a spreading or atomizing nozzle, and where the outlets (37,41) are arranged in relation to each other in such a manner that outflowing fluids will have different directions of discharge and can be brought into contact with each other.

3. Plant according to claim 2, wherein the discharge outlets (37,41) are arranged in such a manner that the directions of discharge are substantially at right-angles to each other.

4. Plant according to any of the claims 1-3, wherein the first supply pipe (17) to the mixing tank (1) opens out into the uppermost part of the mixing tank (1).

5. Plant according to any of the claims 1-4, wherein a pump (23) is provided in the discharge pipe (13) to the irrigation plant, and where the second delivery pipe (39) is connected as a branch pipe downstream after the pump (23).

6. Plant according to any of the claims 1-5, wherein the intake end of the supply pipe (27) for fertilizing agents is provided with a pump (9) which is placed in a tank (11) for concentrated fluid fertilizer (7), and where the uppermost point on the supply pipe (27) is provided with a vacuum valve (43) which can provide access for the surrounding air if a subpressure occurs in the pipe (27).
